# DEMANDE DE BREVET EUROPEEN

(11) **EP 0 740 378 A1**
(43) Date de publication de la demande: **30.10.1996**
(21) Numéro de dépôt: 96400895.7
(22) Date de dépôt: 25.04.1996
(51) Int. Cl.: H02G 1/08

(54) **Procédé d'allongement d'un tube en matériau très rigide et dispositif de mise en oeuvre**

(30) Priorité: 26.04.1995 FR 9505010
(71) Demandeur: FRANCE TELECOM, 75015 Paris (FR)
(72) Inventeur: Robin, Jean-Luc, 94230 Cachan (FR)
(74) Mandataire: Schmit, Christian Norbert Marie

(57) **Abrégé**

Un premier objet de l'invention se rapporte à un procédé d'allongement d'un tube (1) en matériau très rigide destiné à protéger un câble à fibres (3) optiques enterré dans le sous-sol. Ce procédé permet de réaliser des modifications de tracé de lignes d'abonnés sans déconnecter les câbles à fibres optiques (3) contenus dans les tubes. Un deuxième objet de l'invention se rapporte à un dispositif de mise en oeuvre du procédé, permettant d'insérer un câble à fibres optiques, sans le déconnecter, dans un tronçon de tube fendu.

## Description

L'invention se rapporte à un procédé d'allongement d'un tube en matériau très rigide et à un dispositif de mise en oeuvre de ce procédé. Le tube en matériau très rigide permet de protéger un câble à fibres optiques enterré dans le sous-sol; il est en général réalisé à base de polyéthylène expansé haute densité, noté PEHD.

Ce procédé peut être valablement appliqué aux modifications de tracés de lignes d'abonnés. En effet, les travaux routiers, notamment, nécessitent fréquemment de telles modifications.

Les techniques utilisées jusqu'à ce jour, pour rallonger des tubes PEHD, consistent à retirer les câbles à fibres optiques placés dans les tubes, à sectionner les tubes puis à mettre en place, aux endroits sectionnés, des tronçons de tubes. Ces tronçons sont ensuite fixés sur les tubes par soudure. De même, pour raccourcir les tubes PEHD, il faut retirer les câbles à fibres optiques placés dans ces tubes, sectionner les tubes de manière à en supprimer des tronçons, puis fixer par soudure les extrémités des tubes sectionnés. Jusqu'à présent, pour opérer des allongements de tracés, on a donc retiré les câbles à fibres optiques des tubes, de manière à éviter tout risque de détérioration de ces câbles.

Cependant ces techniques présentent de nombreux inconvénients et, notamment, elles entraînent des complications dans la gestion du trafic. En effet, lorsque les câbles à fibres optiques sont déconnectés, le trafic est très perturbé : il est soit dérouté sur d'autres câbles à fibres optiques, soit perdu pendant toute la durée des opérations.

En outre, d'autres inconvénients sont à prendre en compte tels que des durées d'interventions extrêmement longues et des coûts de main d'oeuvre élevés.

La présente invention permet de remédier à ces inconvénients et propose un procédé permettant de réaliser des modifications de tracé sans déconnecter les câbles à fibres optiques contenus dans les tubes.

Ce procédé d'allongement d'un tube en matériau très rigide destiné à protéger un câble à fibres optiques enterré dans le sous-sol, est principalement caractérisé en ce qu'il consiste à :
- fendre un tronçon de tube de manière à former une mâchoire sur toute sa longueur,
- écarter les bords rigides de la mâchoire et introduire dans le tronçon, par cet écartement, le câble à fibres optiques sans le déconnecter,
- refermer la fente, mettre en place le tronçon à d'endroit de la découpe d'un tube existant et le rendre solidaire de ce tube.

Un deuxième objet de la présente invention se rapporte à un dispositif de mise en oeuvre de ce procédé d'allongement. Ce dispositif, permettant notamment d'insérer un câble à fibres optiques dans un tronçon de tube fendu, est principalement caractérisé en ce qu'il comprend :
- un moyen d'écartement apte à écarter les bords rigides de la mâchoire du tronçon,
- un moyen de guidage capable d'introduire dans le tronçon, par l'écartement créé, le câble à fibres optiques sans le déconnecter,
- un anneau de maintien,
- une poignée servant de prise,
- un bras de levier permettant un déplacement manuel le long de la fente du tronçon.

D'autres particularités et avantages de l'invention apparaîtront à la lecture de la description faite à titre d'exemple illustratif et non limitatif en référence aux figures annexées qui représentent :
- la figure 1, un organigramme illustrant les étapes du procédé selon l'invention,
- la figure 2, un schéma d'un mode de réalisation d'un dispositif selon l'invention,
- la figure 3, un schéma d'un mode de réalisation d'une partie d'un dispositif selon l'invention,
- les figures 4a à 4c différentes étapes d'un mode de mise en place et de raccordement d'un tronçon à l'endroit de la découpe d'un tube existant.

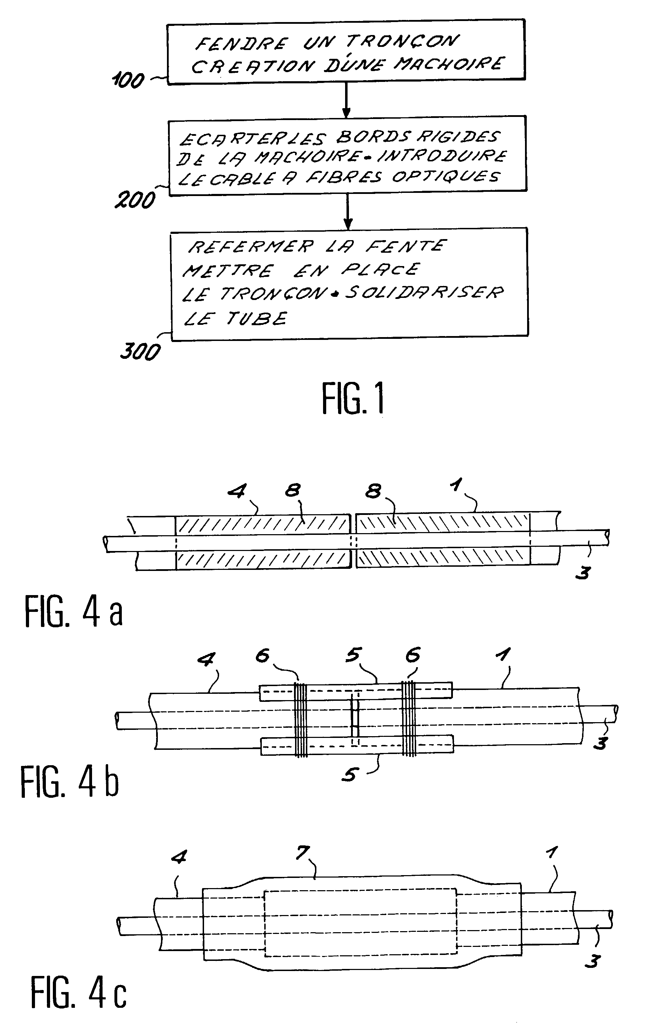

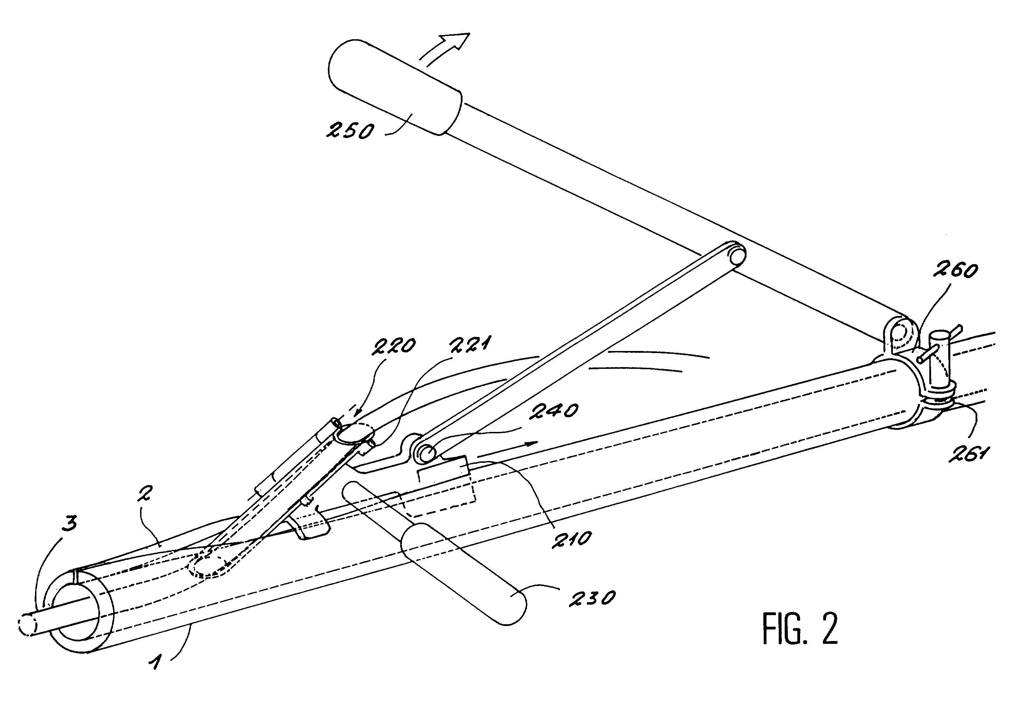

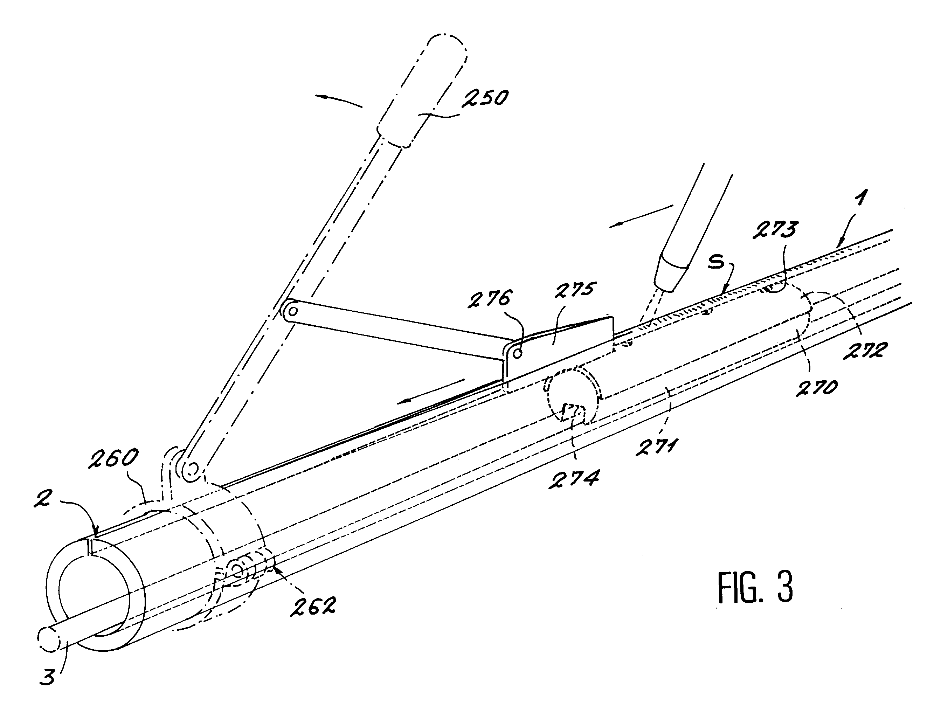

Un mode préféré de réalisation du procédé selon l'invention sera mieux compris au regard de la figure 1.

Pour rallonger un tracé de ligne d'abonnés, il est nécessaire de raccorder un ou plusieurs tronçons de tube supplémentaires au tube existant, c'est à dire au tube en place dans le tracé à modifier. Les tronçons de tube supplémentaires sont en général réalisés dans le même matériau que le tube existant puisque, ce matériau étant très rigide, il constitue une très bonne protection contre les chocs mécaniques notamment. Comme il a été dit précédemment, ces tubes existant sont généralement réalisés à base de polyéthylène expansé haute densité,noté PEHD.

En outre, les tronçons utilisés possèdent une section identique à celle du tube existant.

Le problème qui s'est posé était de pouvoir raccorder ces tronçons au tube existant sans déconnecter le câble à fibres optiques en place dans le tube. Pour cela, on pratique, dans une première étape 100, une fente sur toute la longueur d'un tronçon de manière à créé une mâchoire.

A ce stade du procédé, un deuxième problème s'est posé à savoir : comment introduire le câble à fibres optiques dans ce tronçon de tube fendu. En effet, le matériau est tellement rigide, qu'il est impossible d'écarter, de ses propres mains, les bords de la mâchoire.

Il a donc fallu réaliser un dispositif capable d'effectuer la deuxième étape 200 du procédé, c'est à dire capable d'écarter les bords rigides de la mâchoire et d'introduire dans le tronçon, par cet écartement, un câble à fibres optiques resté connecté. Ce dispositif est décrit dans ce qui suit.

Une dernière étape 300, consiste à refermer la fente, à mettre en place le tronçon à l'endroit de la découpe du tube existant, c'est à dire à l'endroit ou l'on désire effectuer l'allongement et enfin, à solidariser le tronçon au tube existant.

Cependant, pour réaliser toutes ces opérations, il faut également pouvoir allonger le câble à fibres optiques. Dans un tracé, les câbles à fibres optiques sont raccordés entre eux dans des chambres souterraines placées tous les 2400 mètres. Il est prévu, dans chacune de ces chambres, pour chaque câble, un surplus d'environ 30 mètres de câble. Ce surplus de câble constitue le "mou" d'un câble. Ainsi, avant d'insérer un câble à fibres optiques dans un tronçon fendu, il est avantageux de tirer le mou de câble nécessaire à cette opération. Ce tirage s'effectue à partir de la chambre souterraine la plus proche de l'endroit où l'allongement est prévu.

De même, lors de la mise en place et du raccordement d'un tronçon à un tube existant, on résorbe le mou du câble présent dans le tube, de manière à rapprocher aisément les extrémités du tronçon aux extrémités du tube découpé. Cette résorption se fait en tirant le câble vers la chambre souterraine la plus proche du point de raccordement.

Lors de la dernière étape 300, la fente est de préférence refermée au moyen d'une soudure à air chaud. Afin de ne pas détériorer le câble à fibres optiques lors de cette étape, le dispositif comprend en outre un moyen de protection qui est décrit dans ce qui suit.

De plus, le tronçon est rendu solidaire du tube existant de préférence au moyen d'un manchon thermorétractable. Un mode de raccordement à l'aide de ce manchon est également décrit dans ce qui suit.

La découpe du tube existant est avantageusement réalisée au moyen d'un coupe tube, dénommé "coupe tube reed,plastic tubing cuter", de manière à ne pas blesser le câble à fibres optiques.

Le tronçon de tube est, quant à lui fendu sur toute sa longueur à l'aide d'une scie circulaire, telle que la scie commercialisée sous la marque BOSH PKS 40 par exemple, sur laquelle est fixée un guide de maintien du tronçon. La hauteur de coupe est réglée en fonction de l'épaisseur du tronçon, qui mesure en général environ 3 à 4 mm.

Un mode préféré de réalisation d'un dispositif, permettant l'insertion d'un câble à fibres optiques 3 dans un tronçon 1 de tube fendu est illustré sur la figure 2.

Ce dispositif comprend, de manière avantageuse, un moyen d'écartement 210, de manière à écarter les bords rigides de la mâchoire 2 du tronçon.

Un moyen de guidage 220, situé à l'arrière du moyen d'écartement 210, permet d'imposer l'entrée du câble à fibres optiques 3 par l'écartement créé par le moyen d'écartement. Ce moyen de guidage s'ouvre, de manière avantageuse, sur toute sa longueur afin d'y introduire le câble à fibres optiques 3, et il comporte en outre des moyens de fermeture 221, permettant de maintenir le moyen de guidage fermé lors de l'insertion du câble 3 dans le tronçon 1.

Les bords de la mâchoire étant tellement rigides, il s'avère impossible de les écarter en une seule fois sur toute la longueur du tronçon. C'est pourquoi il est avantageusement prévu de déplacer le dispositif sur le tronçon 1 le long de la mâchoire 2, afin d'écarter, au fur et à mesure du déplacement, les bords rigides de cette mâchoire et d'introduire simultanément par l'écartement créé, le câble à fibres optiques 3 à l'intérieur du tronçon.

Afin de pouvoir être déplacé le long du tronçon 1, le dispositif comprend, de préférence, un anneau de maintien 260, une poignée 230 et un bras de levier 250. L'anneau de maintien 260 permet de fixer le dispositif sur le tronçon 1, et de guider le déplacement, de manière à ce que le dispositif ne dévie pas et que les moyens d'écartement 210 et de guidage 220 suivent parfaitement le tracé de la mâchoire 2.

La poignée 230 sert avantageusement de moyen de prise pour un opérateur qui peut alors, lui aussi, contribuer à guider le dispositif le long de la mâchoire 2.

Le bras de levier 250 est rattaché au moyen d'écartement 210, par l'intermédiaire d'un crochet ou d'un rivetage 240 par exemple. Il est en outre rattaché et articulé à l'anneau de maintien 260, au moyen d'un axe mobile.

Ainsi, en actionnant manuellement ce bras de levier 250, c'est à dire en le tirant et en le poussant successivement, un opérateur peut déplacer régulièrement et sans à coup, par tirage, le dispositif le long du tronçon 1.

Une variante consiste à remplacer ce bras du levier 250 par un moteur. Dans ce cas, le moteur est par exemple rattaché à une extrêmité du tronçon et il est accouplé à un enrouleur à démultiplication. Un câble de tirage souple, en acier ou en nylon par exemple, est placé sur cet enrouleur et est relié au moyen d'écartement 210 par l'intermédiaire d'un crochet ou d'un rivetage par exemple. Une force éléctro-mécanique permet donc de tirer le dispositif le long du tronçon 1. En outre, la puissance du moteur est de préférence ajustée de façon à ce que cette force soit suffisante, mais pas trop grande.

En effet, si la force est trop élevée, l'introduction du câble 3 dans le tronçon 1 se fait mal et, dans le cas contraire, si la force est trop faible, le moyen d'écartement 210 n'acquiert pas une résistance suffisante pour pouvoir écarter efficacement les bords rigides de la mâchoire.

En outre, l'anneau de maintien 260 se présente en deux parties, et il comporte, de préférence, une charnière 262 et un moyen d'ouverture 261, afin de pouvoir libérer le câble à fibres optiques 3 du dispositif après l'introduction de ce dernier à l'intérieur du tronçon 1. Le moyen d'ouverture 261 est par exemple situé sur un des cotés latéraux de l'anneau, opposé à la charnière 262.

Selon une autre variante de réalisation, au moins une protubérance non représentée sur la figure 2, est réalisée à l'intérieur de l'anneau de maintien 260. Cette protubérance joue le rôle d'antidérapant : elle évite en effet un éventuel "patinage" du dispositif lors de son déplacement le long du tronçon 1.

Le dispositif qui vient d'être décrit et tel qu'illustré sur la figure 2 permet par conséquent de placer un câble à fibres optiques, sans effort et sans risque de détérioration de ce dernier, à l'intérieur d'un tronçon de tube en matériau très rigide. Il est réalisé dans un matériau dur, comme par exemple un acier.

Selon un autre mode préféré de réalisation, le dispositif selon l'invention comporte en outre un moyen de protection 270 tel qu'illustré sur la figure 3. Ce moyen de protection 270 a pour fonction de protéger, à la fois mécaniquement et thermiquement, le câble à fibres optiques lors de la fermeture de la fente 2 pratiquée sur toute la longueur du tronçon 1.

De préférence, il comporte une rainure 274 sur toute sa longueur, de manière à y insérer le câble à fibres optiques. Le moyen de protection 270 est placé, dans le tronçon 1, de telle façon que la rainure 274 est diamétralement opposée à la fente 2 à refermer. Ainsi donc, le câble à fibres optiques est tenu le plus éloigné possible de la fente, pendant l'opération de fermeture par soudure à air chaud S.

Le moyen de protection est réalisé dans du bois 271 qui a l'avantage de résister à l'échauffement. En outre, une plaque de tôle 272 est de préférence fixée sur sa partie supérieure, c'est à dire sur la partie diamétralement opposée à la rainure 274. Cette plaque de tôle 272, par exemple fixée au moyen de vis 273, est résistante aux chocs et permet par conséquent de protéger mécaniquement le câble à fibres optiques.

Toutefois, selon une variante, si l'on utilise un bois très dur, ce-dernier constitue également une bonne protection mécanique et la plaque de tôle n'a plus de raison d'être.

Un aileron 275 est avantageusement fixé sur la partie supérieure du moyen de protection 270. La fixation se fait par exemple à l'aide d'une soudure ou d'un rivetage. Cet aileron comporte de préférence un orifice 276, servant de point d'encrage, dans lequel on vient placer par exemple un crochet, de manière à déplacer, par tirage, le moyen de protection 270 au fur et à mesure de la fermeture de la fente 2. De plus, l'aileron sert également à maintenir les bords rigides de la mâchoire 2 légèrement écartés, afin de faciliter la soudure. La longueur du moyen de protection 270 est, de manière avantageuse, d'environ 50cm.

De façon préférée, le moyen de protection 270 est rattaché au reste du dispositif illustré sur la figure 2.

Cependant, une variante consiste à séparer le dispositif d'insertion de câble à fibres optiques, tel qu'illustré sur la figure 2, du moyen de protection 270. Dans ce cas, il est nécessaire de rattacher l'aileron 275 à un système de bras de levier, ou à un moteur, pour pouvoir déplacer le moyen de protection 270 au fur et à mesure de la fermeture de la fente 2 sur toute la longueur du tronçon 1.

Un mode préféré de raccordement d'un tronçon 1 à l'endroit de la découpe d'un tube 4, existant sera mieux compris au regard des figures 4a à 4c. Sur ces figures, afin de simplifier les schémas, seul le raccord d'une extrémité du tronçon 1 à une extrémité du tube 4 est représenté.

Dans une première étape, (figure 4a), après avoir résorbé le mou du câble à fibres optiques 3, on ajuste les extrémités d'un tronçon 1 aux extrémités créés par la découpe d'un tube 4 existant.

En outre, il est nécessaire, à ce stade, de prendre des précautions pour protéger le câble à fibres optiques 3.

Pour cela, le câble 3 est centré de manière à ne pas toucher les parois du tronçon 1 et du tube 4. Il est par exemple centré à l'aide de feuilles de papier kraft 8, qui l'entourent jusqu'à atteindre le diamètre intérieur du tronçon et du tube. Le papier utilisé n'est pas une gêne en cas de réutilisation du tuyau; il sert à isoler thermiquement le câble 3 lors de l'étape de manchonnage illustrée par la figure 4c.

Dans une deuxième étape (figure 4b), le tronçon 1 et le tube 4 sont recouverts par deux demi-tubes, de même section et de même matériau que le tronçon 1 et que le tube 4. De préférence, ils recouvrent deux parois, du tronçon 1 et du tube 4, diamétralement opposées l'une par rapport à l'autre. Ces deux demi-tubes sont avantageusement fixés par deux colliers de serrage 6.

Enfin, une dernière étape illustrée par la figure 4c, consiste à placer un manchon thermorétractable, de type manchon RAYCHEM RASK 350, sur le raccord effectué à l'étape précédente, de manière à solidariser le tronçon 1, le tube 4 et les demi-tubes 5. Le manchon thermorétractable est chauffé jusqu'à environ 200°C. Étant donné que le câble à fibres optiques 3 est thermiquement isolé par le papier kraft, il ne subit aucun échauffement.

Il est ensuite possible d'accélérer le refroidissement du manchon à l'aide de chiffons humidifiés par exemple.

Une variante du procédé selon l'invention consiste à raccourcir des tubes en matériau PEHD. Dans ce cas, un tronçon de tube est découpé au coupe tube, pour éviter de détériorer le câble à fibres optiques. Deux fentes, de préférence diamétralement opposées, sont pratiquées sur toute la longueur du tronçon. Afin d'éviter tout risque de détérioration du câble, les fentes sont réalisées au moyen d'une scie circulaire. Cette scie est réglée de manière à ce que la lame coupe le tronçon sur une profondeur légèrement inférieure à son épaisseur. La petite épaisseur restante est coupée à l'aide d'une paire de ciseaux. Ensuite, les deux extrémités du tube restant sont raccordées de la même manière que dans le procédé d'allongement, et tel qu'illustré par les figures 4a à 4c.

## Revendications

1. Procédé d'allongement d'un tube en matériau très rigide destiné à protéger un câble à fibres optiques enterré dans le sous-sol, caractérisé en ce qu'il consiste à :
- fendre un tronçon de tube de manière à former une mâchoire sur toute sa longueur,
- écarter les bords rigides de la mâchoire et introduire dans le tronçon, par cet écartement, le câble à fibres optiques sans le déconnecter,
- refermer la fente, mettre en place le tronçon à l'endroit de la découpe du tube existant et le rendre solidaire de ce tube.

2. Procédé selon la revendication 1, caractérisé en ce que la fermeture de la fente est réalisée au moyen d'une soudure à air chaud.

3. Procédé selon la revendication 1, caractérisé en ce que le tronçon est rendu solidaire du tube au moyen d'un manchon thermorétractable.

4. Dispositif de mise en oeuvre du procédé selon la revendication 1, permettant d'insérer un câble à fibres optiques (3) dans un tronçon (1) de tube fendu, caractérisé en ce qu'il comprend :
- un moyen d'écartement (210) apte à écarter les bords rigides de la mâchoire (2) du tronçon,
- un moyen de guidage (220) capable d'introduire dans le tronçon (1), par l'écartement créé, le câble à fibres optiques (3) sans le déconnecter,
- un anneau de maintien (260),
- une poignée (230) servant de prise,
- un bras de levier (250) permettant un déplacement manuel le long de la fente (2) du tronçon (1).

5. Dispositif selon la revendication 4, caractérisé en ce qu'il comprend en outre :
- un câble de tirage souple relié simultanément à un moteur, par l'intermédiaire d'un enrouleur, et au moyen d'écartement 210, afin de permettre un déplacement électro-mécanique le long de la fente (2) du tronçon (1).

6. Dispositif selon l'une des revendications 4 ou 5, caractérisé en ce que l'anneau de maintien (260) comporte un moyen d'ouverture (261), de manière à libérer le câble à fibres optiques (3) du dispositif.

7. Dispositif selon l'une des revendications 4 à 6, caractérisé en ce qu'au moins une protubérance est formée à l'intérieur de l'anneau de maintien (260).

8. Dispositif selon l'une des revendications 4 à 7, caractérisé en ce qu'il comporte en outre un moyen de protection (270), apte à protéger le câble à fibres optiques (3) lors de la fermeture de la fente (2).

9. Dispositif selon la revendication 8, caractérisé en ce que le moyen de protection comprend :
- un cylindre de bois (271) , permettant une protection thermique du câble,
- une plaque de tôle (272), permettant une protection mécanique du câble.
